# EUROPÄISCHE PATENTANMELDUNG

(11) **EP 4 016 022 A1**
(43) Veröffentlichungstag der Anmeldung: **22.06.2022**
(21) Anmeldenummer: 21204874.8
(22) Anmeldetag: 26.10.2021
(51) Int. Cl.: G01K 1/02, G01B 7/00, G01K 7/16, G01K 7/20, G01K 13/06, G01K 13/08, G01L 1/14, H01C 10/00

(54) **VORRICHTUNG ZUR ERFASSUNG VON TEMPERATUREN IN ODER AN EINEM ELASTOMERBAUTEIL**

(30) Priorität: 18.12.2020 DE 102020216232
(71) Anmelder: ContiTech Antriebssysteme GmbH, 30165 Hannover (DE)
(72) Erfinder: Reck, Siegfried, 30419 Hannover (DE); Sattler, Heiko, 30419 Hannover (DE)
(74) Vertreter: Continental Corporation

(57) **Zusammenfassung**

Die vorliegende Erfindung betrifft eine Vorrichtung zur Erfassung von Temperaturen in oder an einem Elastomerbauteil (3), mit einem Elastomerbauteil (3), mit wenigstens einem Temperatursensor (1), wobei der Temperatursensor (1) wenigstens einen Resonator (10) aufweist, dessen Eigenfrequenz von den zu erfassenden Temperatur (A), vorzugsweise zumindest im Wesentlichen linear, abhängig ist, wobei wenigstens der Resonator (10) derart in das Elastomerbauteil (3) ein-gebettet oder auf dem Elastomerbauteil (3) aufgebracht ist, dass an oder im Elastomerbauteil (3) vorliegende Temperaturen die Eigenfrequenz des Resonators (10) verändern können, und mit wenigstens einer Steuerungseinheit (2), welche ausgebildet ist, den Resonator (10) zu Schwingungen in dessen Eigenfrequenz anzuregen und dessen Schwingungen zu erfassen, wobei die Steuerungseinheit (2) ferner ausgebildet ist, aus den erfassten Schwingungen des Resonators (10) die Temperaturen des Elastomerbauteils (3) zu bestimmen.

## Beschreibung

Die vorliegende Erfindung betrifft eine Vorrichtung zur Erfassung von Temperaturen in oder an einem Elastomerbauteil gemäß dem Patentanspruch 1, einen Temperatursensor zur Verwendung in einer derartigen Vorrichtung gemäß dem Patentanspruch 9 sowie eine Steuerungseinheit zur Verwendung in einer derartigen Vorrichtung gemäß dem Patentanspruch 10.

Es ist bekannt, zur Messung von Temperatur, Luftfeuchte, Druck, Dehnung etc. RFID-Transponder zu verwenden, welche am Ort der Messung angeordnet werden. Dies gilt insbesondere für sich bewegende Orte der Messung, welche auf einem Riemen oder dergleichen angeordnet sind. Derartige Riemen können beispielsweise Transportriemen bzw. Förderriemen, auch Transportbänder oder Förderbänder genannt, ebenso sein wie Antriebsriemen oder Aufzugsriemen.

Bekannte marktübliche RFID-Transponder arbeiten üblicherweise mit Frequenzen im Hochfrequenzband um 13,56 MHz und im Ultrahochfrequenzband um 868 MHz. Diese Systeme enthalten elektronische Baugruppen für die Aufbereitung des Messwertsignals, welche zum Beispiel eine Dehnung repräsentieren können, und dessen Übertragung an eine Sende-/Empfängereinheit. Die Energie für den Betrieb seiner elektronischen Komponenten gewinnt der RFID-Transponder bei der Abfrage aus dem elektromagnetischen Feld der Sende-/Empfängereinheit.

Da Sensoren auf der Basis von Dehnungsmessstreifen (DMS) aufgrund ihres Messprinzips einen relativ hohen Energiebedarf aufweisen, sind üblicherweise mehrere Abfrage-Zyklen mit hoher Sendeleistung erforderlich, um dem RFID-Transponder die notwendige Energiemenge bereitzustellen. Die wiederholte Abfrage erfordert entsprechende Anpassungen im Übertragungsprotokoll der entsprechende Sende-/Empfängereinheit.

RFID-Transponder nach dem Stand der Technik lassen sich somit nur bedingt in dynamisch belasteten elastomeren Produkten wie zum Beispiel in Antriebsriemen integrieren, weil die elektronischen Komponenten des RFID-Transponders den Aufbau des elastomeren Produkts stören könnten. Auch können die dynamischen Belastungen des elastomeren Produkts zu frühen Ausfällen des RFID-Transponders führen. Des Weiteren können die elektronischen Komponenten des RFID-Transponders bereits den Bedingungen der Vulkanisation des elastomeren Produkts nicht standhalten.

Eine Aufgabe der vorliegenden Erfindung ist es, eine Vorrichtung zur sensorischen Erfassung von Temperaturen an bzw. in elastomeren Bauteilen zu schaffen. Dies soll möglichst einfach, kostengünstig, bauraumsparend, langlebig, großflächig und bzw. oder flexibel einsetzbar umgesetzt werden können. Insbesondere soll der entsprechende Temperatursensor ohne Energiequelle und bzw. oder drahtlos betrieben werden können. Zumindest soll eine Alternative zu bekannten derartigen Vorrichtungen bzw. Temperatursensoren geschaffen werden.

Die Aufgabe wird erfindungsgemäß durch eine Vorrichtung mit den Merkmalen gemäß Patentanspruch 1, durch einen Temperatursensor mit den Merkmalen gemäß Patentanspruch 9 sowie durch eine Steuerungseinheit mit den Merkmalen gemäß Patentanspruch 10 gelöst. Vorteilhafte Weiterbildungen sind in den Unteransprüchen beschrieben.

Somit betrifft die vorliegende Erfindung eine Vorrichtung zur Erfassung von Temperaturen in einem Elastomerbauteil mit einem Elastomerbauteil, mit wenigstens einem Temperatursensor, wobei der Temperatursensor wenigstens einen Resonator aufweist, dessen Eigenfrequenz von den zu erfassenden Temperaturen, vorzugsweise zumindest im Wesentlichen linear, abhängig ist, wobei wenigstens der Resonator derart in das Elastomerbauteil eingebettet oder auf dem Elastomerbauteil aufgebracht ist, dass an oder im Elastomerbauteil vorliegende Temperaturen die Eigenfrequenz des Resonators verändern können, und mit wenigstens einer Steuerungseinheit, welche ausgebildet ist, den Resonator zu Schwingungen in dessen Eigenfrequenz anzuregen und dessen Schwingungen zu erfassen, wobei die Steuerungseinheit ferner ausgebildet ist, aus den erfassten Schwingungen des Resonators die Temperaturen des Elastomerbauteils zu bestimmen.

Mit anderen Worten kann erfindungsgemäß ein Resonator eines Temperatursensors geschaffen und in das Elastomerbauteil eingebettet oder auf dem Elastomerbauteil aufgebracht werden, dessen Temperaturen vom Resonator sensorisch erfasst werden sollen. Der Resonator kann entsprechend ausgebildet sein, dass Temperaturen dessen Schwingungsverhalten derart beeinflussen können, dass das Schwingungsverhalten des Resonators charakteristisch für die vorherrschenden Temperaturen sein kann. Wird nun der Resonator zu Schwingungen angeregt sowie das Schwingungsverhalten des Resonators erfasst und ausgewertet, kann hierdurch auf die vorherrschenden Temperaturen geschlossen werden. Hierdurch können Temperaturen kontinuierlich sensorisch erfasst werden, welche innerhalb des Elastomerbauteils bzw. an dem Elastomerbauteil auftreten können.

Vorteilhaft ist hierbei insbesondere, dass sich ein derartiger Resonator zum Beispiel durch Vulkanisation, durch Drucken oder durch Kleben einfach, schnell, positionsgenau und bzw. oder robust in das Elastomerbauteil integrieren bzw. einbetten oder auf dessen Oberfläche aufbringen lassen kann. Auch kann ein derartiger Resonator als einfaches Bauteil vergleichsweise kostengünstig zur Verfügung gestellt werden.

Gemäß einem Aspekt der Erfindung besteht der Resonator aus elastischen Materialien. Auf diese Art und Weise kann sich der Resonator den Bewegungen des Elastomerbauteils flexibel anpassen und hierdurch durch mechanische Kräfte, Spannungen bzw. Dehnungen möglichst nicht beschädigt werden, im Unterschied zu bekannten starren Messwandlern.

Gemäß einem weiteren Aspekt der Erfindung ist der Resonator als hochfrequenter Resonator ausgebildet. Unter einem hochfrequenten Resonator wird ein Resonator verstanden, welcher im Frequenzbereich hochfrequenter oder ultrahochfrequenter Schwingungen arbeiten kann. Hierunter werden Frequenzen im Bereich einer Frequenz von 1 bis 300 MHz als Hochfrequenzbereich bzw. als Hochfrequenzband sowie Frequenzen im Bereich einer Frequenz von 300 MHz bis 3 GHz als Ultrahochfrequenzbereich bzw. als Ultrahochfrequenzband verstanden.

Vorteilhaft ist hieran, dass derart hohe Frequenzen entsprechend kleine Wellenlängen aufweisen und somit der Resonator mit vergleichsweise kleinen Abmessungen realisiert werden kann. Auf diese Art und Weise kann der vergleichsweise kleine Resonator auch in sehr kleine Elastomerbauteile integriert bzw. auf sehr kleinen Elastomerbauteilen aufgebracht werden. Insgesamt kann ein kleiner Resonator es begünstigen, innerhalb von Elastomerbauteilen eingebettet bzw. auf Elastomerbauteilen aufgebracht zu werden.

Vorteilhaft ist hieran auch, dass aufgrund der hohen Frequenz keine Wechselwirkung zwischen dem elektromagnetischen Feld des Resonators und dem Elastomerbauteilen selbst auftreten kann, welche sich negativ auf die Funktionsweise auswirken könnte.

Vorteilhaft ist hieran ferner, dass aufgrund seiner hohen Arbeitsfrequenz der Resonator sehr empfindlich für das Messwertsignal und damit auf die Temperaturen sein kann. Dies kann die Messempfindlichkeit erhöhen.

Gemäß einem weiteren Aspekt der Erfindung weist der Resonator wenigstens eine elektrisch leitfähige Leiterschicht auf, welche flächig auf oder in dem Elastomerbauteil angeordnet ist, wobei auf der elektrisch leitfähigen Leiterschicht ein Dielektrikum angeordnet ist und wobei auf dem Dielektrikum, der elektrisch leitfähigen Leiterschicht abgewandt, wenigstens ein Leiterstreifen angeordnet ist, welcher sich parallel zu der elektrisch leitfähigen Leiterschicht erstreckt. Dies kann eine einfache Möglichkeit darstellen, einen Resonator mit den hier beschriebenen Eigenschaften und Vorteilen umzusetzen.

Gemäß einem weiteren Aspekt der Erfindung ist der Resonator sich flächig erstreckend ausgebildet, wobei der Resonator mit seiner flächigen Erstreckungsebene in das Elastomerbauteil eingebettet oder auf dem Elastomerbauteil aufgebracht ist. Dies kann eine großflächige sensorische Erfassung der Temperaturen begünstigen, was die Qualität der sensorisch erfassten Werte verbessern kann.

Gemäß einem weiteren Aspekt der Erfindung weist die Steuerungseinheit wenigstens eine Antenne zur Erzeugung eines elektromagnetischen Feldes zur elektromagnetischen Kopplung mit dem Resonator auf. Auf diese Art und Weise können die Anregung des Resonators sowie das Erfassen des Schwingungsverhaltens drahtlos aus der Umgebung des Elastomerbauteils erfolgen. Dies kann die Flexibilität der Umsetzung der erfindungsgemäßen Vorrichtung begünstigen.

Gemäß einem weiteren Aspekt der Erfindung ist die Steuerungseinheit ausgebildet, den Resonator mittels breitbandiger Impulse zu Schwingungen in dessen Eigenfrequenz anzuregen, dessen Impulsantworten zu erfassen und aus den erfassten Impulsantworten die Temperaturen zu bestimmen. Dies kann eine Betriebsweise darstellen, den Resonator zu Schwingungen in seiner Eigenfrequenz anzuregen und das entsprechende Signal des Resonators zu erfassen bzw. zu empfangen.

Gemäß einem weiteren Aspekt der Erfindung ist die Steuerungseinheit ausgebildet, den Resonator kontinuierlich mit Schwingungen variabler Frequenz zu Schwingungen in dessen Eigenfrequenz anzuregen, dessen Schwingungen zu erfassen, aus der Resonanzfrequenz der erfassten Schwingungen die Übertragungsparametern zu bestimmen und aus den bestimmten Übertragungsparametern die Temperaturen zu bestimmen. Dies kann eine alternative Betriebsweise darstellen, den Resonator zu Schwingungen in seiner Eigenfrequenz anzuregen und das entsprechende Signal des Resonators zu erfassen bzw. zu empfangen.

Die vorliegende Erfindung betrifft auch einen Temperatursensor zur Verwendung in einer Vorrichtung zur Erfassung von Temperaturen in oder an einem Elastomerbauteil wie zuvor beschrieben. Hierdurch kann ein Temperatursensor geschaffen werden, um die zuvor beschriebene Vorrichtung zu realisieren und dessen Eigenschaften und Vorteile nutzen zu können.

Die vorliegende Erfindung betrifft auch eine Steuerungseinheit zur Verwendung in einer Vorrichtung zur Erfassung von Temperaturen in einem Elastomerbauteil wie zuvor beschrieben. Hierdurch kann eine Steuerungseinheit geschaffen werden, um die zuvor beschriebene Vorrichtung zu realisieren und dessen Eigenschaften und Vorteile nutzen zu können. Auch kann die Steuerungseinheit universell verwendet werden, z.B. für ähnliche Vorrichtungen bzw. Mess-Systeme, bei entsprechender Anpassung der softwareseitigen Umsetzung der zuvor beschriebenen Funktionen auf den jeweiligen Anwendungsfall.

Mehrere Ausführungsbeispiele und weitere Vorteile der Erfindung werden nachstehend im Zusammenhang mit den folgenden Figuren schematisch dargestellt und erläutert. Darin zeigt:
- Fig. 1: eine Draufsicht auf einen erfindungsgemäßen Dehnungssensor bzw. auf einen erfindungsgemäßen Temperatursensor;
- Fig. 2: einen Längsschnitt durch den erfindungsgemäßen Dehnungssensor bzw. Temperatursensor der Fig. 1;
- Fig. 3: eine erfindungsgemäße Vorrichtung zur Erfassung von mechanischen Dehnungen in einem Elastomerbauteil mittels des erfindungsgemäßen Dehnungssensors; und
- Fig. 4: eine erfindungsgemäße Vorrichtung zur Erfassung von mechanischen Dehnungen in einem Elastomerbauteil mittels des erfindungsgemäßen Dehnungssensors und zur Erfassung von Temperaturen in dem Elastomerbauteil mittels des erfindungsgemäßen Temperatursensors.

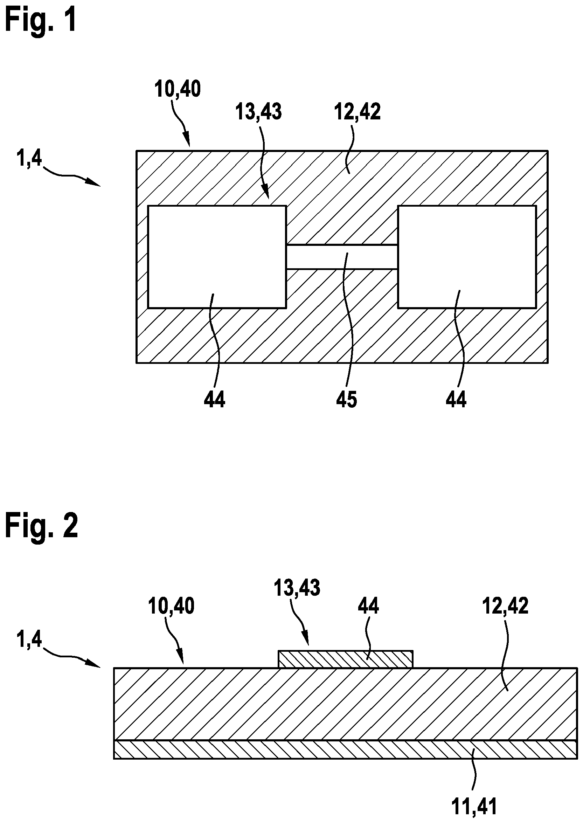

Fig. 1 zeigt eine Draufsicht auf einen erfindungsgemäßen Dehnungssensor 1 bzw. auf einen erfindungsgemäßen Temperatursensor 4. Fig. 2 zeigt einen Längsschnitt durch den erfindungsgemäßen Dehnungssensor 1 bzw. Temperatursensor 4 der Fig. 1.

Der Dehnungssensor 1 besteht aus einem Resonator 10, welcher als symmetrische Streifenleitung ausgebildet ist und eine elektrisch leitfähige Leiterschicht 11 aufweist, welche senkrecht zu ihrer flächigen Erstreckung von einem Dielektrikum 12 flächig bedeckt wird. Der elektrisch leitfähigen Leiterschicht 11 abgewandt ist ein elektrisch leitfähiger Leiterstreifen 13 auf dem Dielektrikum 12 angeordnet, so dass sich der elektrisch leitfähige Leiterstreifen 13 in seiner flächigen Erstreckung parallel zu der elektrisch leitfähigen Leiterschicht 11 erstreckt. Die elektrisch leitfähigen Leiterschicht 11 liegt auf dem elektrischen Bezugspotenzial (Masse). Der Resonator 10 ist somit als symmetrische Streifenleitung, als sogenannte Stripline, ausgeführt. Der Leiterstreifen 13 stellt einen Dipol 13 dar. Auf den Dehnungssensor 1 können in der Ebene der flächigen Erstreckung des Resonators 10 mechanische Dehnungen A wirken und sensorisch erfasst werden, wie weiter unten näher beschrieben werden wird.

Der Temperatursensor 4 besteht aus einem Resonator 40, welcher als symmetrische Streifenleitung ausgebildet ist und eine elektrisch leitfähige Leiterschicht 41 aufweist, welche senkrecht zu ihrer flächigen Erstreckung von einem Dielektrikum 42 flächig bedeckt wird. Der elektrisch leitfähigen Leiterschicht 41 abgewandt ist ein elektrisch leitfähiger Leiterstreifen 43 auf dem Dielektrikum 42 angeordnet, so dass sich der elektrisch leitfähige Leiterstreifen 43 in seiner flächigen Erstreckung parallel zu der elektrisch leitfähigen Leiterschicht 41 erstreckt. Die elektrisch leitfähigen Leiterschicht 41 liegt auf dem elektrischen Bezugspotenzial (Masse). Der Resonator 40 ist somit als symmetrische Streifenleitung, als sogenannte Stripline, ausgeführt. Der Leiterstreifen 43 stellt einen Dipol 43 dar. Der Leiterstreifen 43 besteht aus zwei Stegen 44, welche in der länglichen Erstreckungsrichtung des Leiterstreifens 43 mittig durch einen temperaturabhängigen Dämpfungswiderstand 45 elektrisch leitfähig verbunden ist. Auf den Temperatursensor 1 können Temperaturen wirken und sensorisch erfasst werden, wie weiter unten näher beschrieben werden wird.

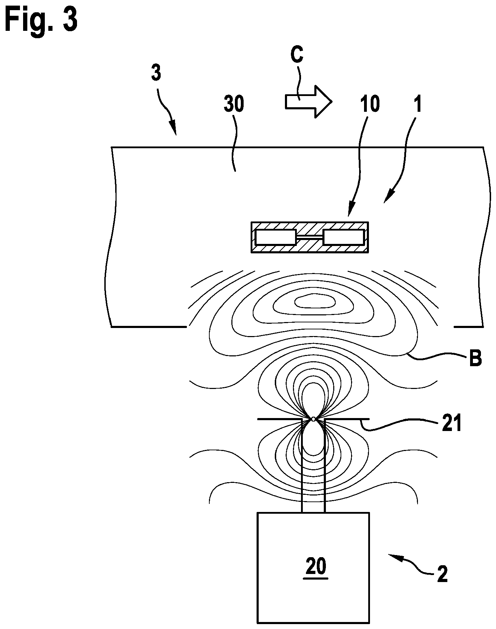

Fig. 3 zeigt eine erfindungsgemäße Vorrichtung zur Erfassung von mechanischen Dehnungen in einem Elastomerbauteil 3 mittels des erfindungsgemäßen Dehnungssensors 1.

Das Elastomerbauteil 3 in Form eines Riemens 3 weist ein Elastomerelement 30 aus Gummi auf, in welches der Resonator 10 des Dehnungssensors 1 eingebettet bzw. auf welches der Resonator 10 des Dehnungssensors 1 aufgebracht ist. Der Riemen 3 kann in einer Bewegungsrichtung C bzw. in einer Laufrichtung C angetrieben bzw. bewegt werden. Zu der erfindungsgemäßen Vorrichtung gehört ferner eine Steuerungseinheit 2 mit einer Sende-/Empfangseinheit 20 und mit einer ersten Antenne 21.

Der erfinderische Grundgedanke besteht darin, lediglich einen Messsignalwandler in Form des Resonators 10 des Dehnungssensor 1 als zweidimensionale Struktur in den Riemen 3 als Elastomerbauteil 3 zu integrieren. Der Resonator 10 des Dehnungssensors 1 wird über ein erstes hochfrequentes elektromagnetisches Feld B, welches von der ersten Antenne 21 der Sende-/Empfangseinheit 20 ausgesendet wird, zu einer charakteristischen Systemantwort angeregt, aus welcher sich ein Messwertsignal berechnen lässt. Im einfachsten Fall handelt es sich bei dem Resonator 10 des Dehnungssensor 1 um einen elektrischen Dipol.

Das Elastomerbauteil 3 als Antriebsriemen 3 ist mit dem hochfrequenten Resonator 10 des Dehnungssensor 1 ausgestattet, welcher eine geringe Dämpfung aufweist und dessen Eigenfrequenz von der zu messenden mechanischen Dehnung A abhängt. Insbesondere kann der Resonator 10 auf eine Frequenz aus dem Mikrowellen- oder Terrahertz-Band abgestimmt sein, zum Beispiel auf 2,45 GHz. Dies kann vorteilhaft sein, da sich der Resonator 10 aufgrund der kleinen Abmessungen in diesem Fall einfacher in den Elastomerkörper 30 des Riemens 3 integrieren lässt. Auch kann aufgrund der hohen Frequenz keine Wechselwirkung zwischen dem ersten elektromagnetischen Feld B des Resonators 10 und dem Elastomerkörper 30 des Riemens 3 auftreten, die sich negativ auf die Funktionsweise auswirken könnte.

Üblicherweise bestehen Streifenleitungen bisher aus starren Materialien. Im Gegensatz dazu besteht der erfindungsgemäße Resonator 10 des Dehnungssensor 1 aus elastischen Materialien, deren mechanische Eigenschaften an die elastomere Umgebung des Riemens 3 angepasst sind, damit der Resonator 10 des Dehnungssensor 1 den Verformungen des Riemens 3 folgen kann.

Sowohl der Resonator 10 des Dehnungssensor 1 als auch die elektrisch leitfähige Leiterschicht 11 auf der Unterseite des Resonators 10 sind als zweidimensionale Strukturen auf dem elastischen Dielektrikum 12 gedruckt. Die dazu verwendete leitfähige Tinte basiert auf metallischen Nanopartikeln und lässt deshalb große Dehnungen von ca. 1% zu, bevor die damit gedruckten Strukturen ihre Leitfähigkeit verlieren.

Der Resonator 10 des Dehnungssensor 1 dehnt sich in gleichem Maße wie das Elastomer des Riemens 3, das ihn umgibt, und verändert dabei seine Länge entsprechend, und mit ihr seine Resonanzfrequenz. Mit seiner ersten Antenne 21 erzeugt die Sende-/Empfangseinheit 2 das erste elektromagnetische Feld B. Mit einem Impuls regt die Sende-/Empfangseinheit 2 den Resonator 10 des Dehnungssensors 1 zu Schwingungen in dessen Eigenfrequenz an und empfängt dessen Antwortsignal. Die Sende-/Empfangseinheit 2 ist als sogenanntes "Software Defined Radio" ausgeführt, dessen integrierte programmierbare Recheneinheit die o.g. Betriebsweisen realisiert und das Messwertsignal aus der Resonanzfrequenz des hochfrequenten Signals ermittelt.

Vorteilhaft ist hieran, dass der Resonator 10 des Dehnungssensor 1 ein einfaches, kostengünstiges Bauteil ist. Der Resonator 10 lässt sich einfach in die elastomere Umgebung des Riemens 3 integrieren, zum Beispiel durch Vulkanisation, Drucken oder Kleben. Wegen seiner hohen Arbeitsfrequenz ist der Resonator 10 sehr empfindlich für das Messwertsignal, d.h. für die mechanischen Dehnungen. Wegen seiner elastischen Bauweise kann der Resonator 10 des Dehnungssensor 1 starken mechanischen Dehnungen folgen. Die Sende-/Empfangseinheit 2 kann universell verwendet werden, z.B. für ähnliche Mess-Systeme, nach einer entsprechenden Anpassung seiner Software.

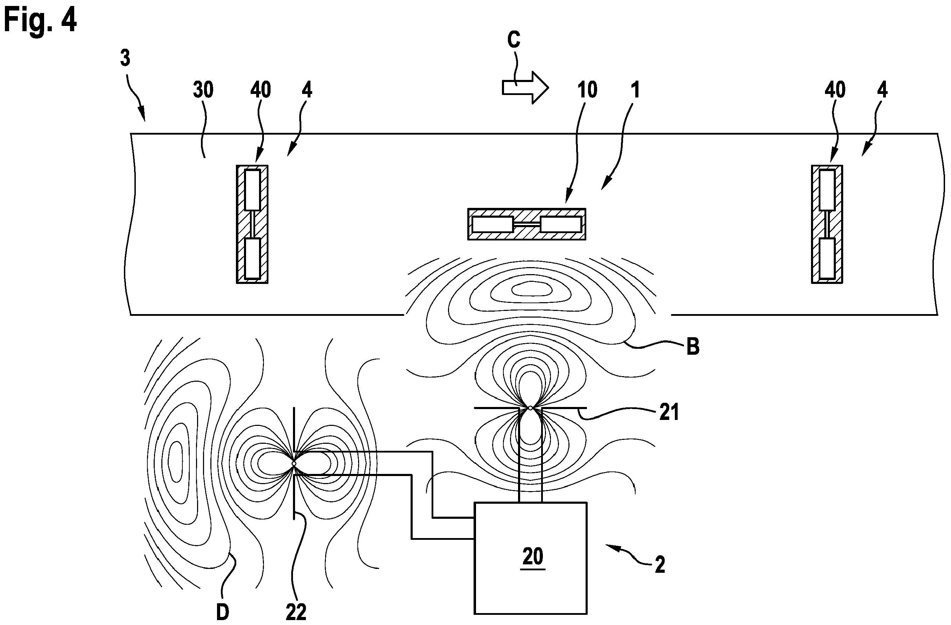

Fig. 4 zeigt eine erfindungsgemäße Vorrichtung zur Erfassung von mechanischen Dehnungen A in einem Elastomerbauteil 3 mittels des erfindungsgemäßen Dehnungssensors 1 und zur Erfassung von Temperaturen in dem Elastomerbauteil 3 mittels des erfindungsgemäßen Temperatursensors 4.

Die erfindungsgemäße Vorrichtung zur Dehnungsmessung kann zum Beispiel auf den Antriebsriemen 3 der Fig. 3 angewendet werden. Zum Schutz vor Beschädigungen werden mehrere Resonatoren 10 erfindungsgemäßer Dehnungssensoren 1 in eine der oberen Gewebelagen des Riemens 3 eingearbeitet. Auf dem Umfang des Riemens 3 befindet sich mindestens ein Resonator 10 des Dehnungssensor 1 mit hoher Schwingungsgüte in der Bewegungsrichtung A des Riemens 3 ausgerichtet angeordnet.

Vor bzw. hinter dem Resonator 10 des erfindungsgemäßen Dehnungssensors 1 in der Bewegungsrichtung A des Riemens 1 befindet sich, quer zur Laufrichtung A bzw. zur Bewegungsrichtung A, jeweils ein Resonator 40 des erfindungsgemäßen Temperatursensors 4 mit relativ geringer Güte (Snubber). Zu diesem Zweck ist zwischen den Stegen 44 des Dipols 43 im Resonator 40 des Temperatursensors 4 der temperaturabhängige elektrische Dämpfungswiderstand 45 geschaltet, der als Widerstandsbahn gedruckt wird.

Die Antennen 21, 22 der Sende-/Empfangseinheit 20 werden durch zwei Dipole realisiert, welche kreuzweise angeordnet sind, wobei die erste Antenne 21 in Laufrichtung A und die zweite Antenne 22 quer zur Laufrichtung A ausgerichtet ist, um bestmöglich mit den korrespondierenden Resonatoren 10, 40 des Dehnungssensors 1 bzw. des Temperatursensors 4 zu koppeln.

Mit der zweiten Antenne 22 erzeugt die Sende-/Empfangseinheit 20 ein zweites elektromagnetisches Feld D, dessen Frequenz auf die Resonanz der Snubber-Resonatoren 40 der Temperatursensoren 4 abgestimmt ist. Wenn die Resonatoren 40 der Temperatursensoren 4 während des Betriebs des Riemens 3 die zweite Antenne 22 passieren, entzieht die zweite Antenne 22 dem zweiten elektromagnetischen Feld D Energie und moduliert es auf diese Weise in seiner Amplitude. Wegen der Temperaturabhängigkeit des Dämpfungswiderstands 45 des Resonators 40 des Temperatursensors 4 hängt die Modulation des elektromagnetischen Feldes D systematisch von der Temperatur ab, so dass sich die Temperatur des Riemens 3 an dieser Stelle aus dem modulierten Signal ermitteln lässt.

Bei einer fallenden Flanke der Amplitude startet die Dehnungsmessung mittels des Dehnungssensors 1. Die Sende-/Empfangseinheit 20 gibt ein Impuls-Signal über die erste Antenne 21 auf den Resonator 10 des Dehnungssensors 1 und wertet die Impulsantwort des Resonators 10 aus. Aus der Resonanzfrequenz berechnet die Sende-/Empfangseinheit 20 die aktuelle Länge des Resonators 10 und bezieht die berechnete Länge bzw. Dehnung auf dessen ungedehnte Länge, um die Dehnung zu berechnen.

Besonders vorteilhaft ist eine periodische Wiederholung der Messungen des Dehnungssensors 1 und der Temperatursensoren 4 entlang des Riemens 3, wodurch eine höhere zeitliche Auflösung der Dehnungsmessung sowie der Temperaturmessung ermöglicht werden kann.

Weitere Anwendungen für den erfindungsgemäßen Dehnungssensor 1 und bzw. oder für den erfindungsgemäßen Temperatursensor 4 bzw. für hierauf aufbauende erfindungsgemäße Vorrichtungen stellen elastische Elemente dar, welche auf Druck bzw. Zug beansprucht werden, wie zum Beispiel Federungselemente in Klauenkupplungen, Gummi-Metall-Federn, elastische Schläuche, Luftfedern und dergleichen.

### Bezugszeichenliste (Teil der Beschreibung)

- A: mechanische Dehnungen bzw. Richtung der mechanischen Dehnungen
- B: ersten elektromagnetisches Feld der ersten Antenne 21
- C: Bewegungsrichtung bzw. Laufrichtung des Riemens 3
- D: zweites elektromagnetisches Feld der zweiten Antenne 22

- 1: Dehnungssensor
- 10: Resonator; symmetrische Streifenleitung
- 11: Leiterschicht
- 12: Dielektrikum
- 13: Leiterstreifen; Dipol

- 2: Steuerungseinheit
- 20: Sende-/Empfangseinheit
- 21: erste Antenne
- 22: zweite Antenne

- 3: Elastomerbauteil; Riemen
- 30: Elastomerkörper

- 4: Temperatursensor
- 40: Resonator; symmetrische Streifenleitung
- 41: Leiterschicht
- 42: Dielektrikum
- 43: Leiterstreifen; Dipol
- 44: Stege
- 45: temperaturabhängiger Dämpfungswiderstand

## Patentansprüche

1. Vorrichtung zur Erfassung von Temperaturen in oder an einem Elastomerbauteil (3),
mit einem Elastomerbauteil (3),
mit wenigstens einem Temperatursensor (1),
wobei der Temperatursensor (1) wenigstens einen Resonator (10) aufweist, dessen Eigenfrequenz von den zu erfassenden Temperatur (A), vorzugsweise zumindest im Wesentlichen linear, abhängig ist,
wobei wenigstens der Resonator (10) derart in das Elastomerbauteil (3) eingebettet oder auf dem Elastomerbauteil (3) aufgebracht ist, dass an oder im Elastomerbauteil (3) vorliegende Temperaturen die Eigenfrequenz des Resonators (10) verändern können, und
mit wenigstens einer Steuerungseinheit (2), welche ausgebildet ist, den Resonator (10) zu Schwingungen in dessen Eigenfrequenz anzuregen und dessen Schwingungen zu erfassen,
wobei die Steuerungseinheit (2) ferner ausgebildet ist, aus den erfassten Schwingungen des Resonators (10) die Temperaturen des Elastomerbauteils (3) zu bestimmen.

2. Vorrichtung nach Anspruch 1, **dadurch gekennzeichnet, dass** der Resonator (10) aus elastischen Materialien besteht.

3. Vorrichtung nach Anspruch 1 oder 2, **dadurch gekennzeichnet, dass** der Resonator (10) als hochfrequenter Resonator (10) ausgebildet ist.

4. Vorrichtung nach einem der vorangehenden Ansprüche, **dadurch gekennzeichnet, dass**
der Resonator (10) wenigstens eine elektrisch leitfähige Leiterschicht (11) aufweist, welche flächig auf oder in dem Elastomerbauteil (3) angeordnet ist, wobei auf der elektrisch leitfähigen Leiterschicht (11) ein Dielektrikum (12) angeordnet ist und
wobei auf dem Dielektrikum (12), der elektrisch leitfähigen Leiterschicht (11) abgewandt, wenigstens ein Leiterstreifen (13) angeordnet ist, welcher sich parallel zu der elektrisch leitfähigen Leiterschicht (11) erstreckt.

5. Vorrichtung nach einem der vorangehenden Ansprüche, **dadurch gekennzeichnet, dass**
der Resonator (10) sich flächig erstreckend ausgebildet ist,
wobei der Resonator (10) mit seiner flächigen Erstreckungsebene in das Elastomerbauteil (3) eingebettet oder auf dem Elastomerbauteil (3) aufgebracht ist.

6. Vorrichtung nach einem der vorangehenden Ansprüche, **dadurch gekennzeichnet, dass**
die Steuerungseinheit (2) wenigstens eine Antenne (22) zur Erzeugung eines elektromagnetischen Feldes (B) zur elektromagnetischen Kopplung mit dem Resonator (10) aufweist.

7. Vorrichtung nach einem der vorangehenden Ansprüche, **dadurch gekennzeichnet, dass**
die Steuerungseinheit (2) ausgebildet ist, den Resonator (10) mittels breitbandiger Impulse zu Schwingungen in dessen Eigenfrequenz anzuregen, dessen Impulsantworten zu erfassen und aus den erfassten Impulsantworten die Temperaturen zu bestimmen.

8. Vorrichtung nach einem der vorangehenden Ansprüche, **dadurch gekennzeichnet, dass**
die Steuerungseinheit (2) ausgebildet ist, den Resonator (10) kontinuierlich mit Schwingungen variabler Frequenz zu Schwingungen in dessen Eigenfrequenz anzuregen, dessen Schwingungen zu erfassen, aus der Resonanzfrequenz der erfassten Schwingungen die Übertragungsparametern zu bestimmen und aus den bestimmten Übertragungsparametern die Temperaturen zu bestimmen.

9. Temperatursensor (1) zur Verwendung in einer Vorrichtung zur Erfassung von Temperaturen in oder an einem Elastomerbauteil (3) nach einem der Ansprüche 1 bis 8.

10. Steuerungseinheit (2) zur Verwendung in einer Vorrichtung zur Erfassung von Temperaturen in einem Elastomerbauteil (3) nach einem der Ansprüche 1 bis 8.
